# EUROPÄISCHE PATENTANMELDUNG

(11) **EP 4 033 308 A1**
(43) Veröffentlichungstag der Anmeldung: **27.07.2022**
(21) Anmeldenummer: 21215906.5
(22) Anmeldetag: 20.12.2021
(51) Int. Cl.: G05B 15/02

(54) **SCHALTANORDNUNG ZUR STEUERUNG EINER MEHRZAHL VON ELEKTRISCHEN LASTEN**

(30) Priorität: 21.01.2021 DE 102021200507
(71) Anmelder: BSH Hausgeräte GmbH, 81739 München (DE)
(72) Erfinder: Gerhardt, Martin, 93059 Regensburg (DE); Pflauminger, Martin, 93102 Pfatter (DE)

(57) **Zusammenfassung**

Es wird eine Schaltungsanordnung (200) zur Steuerung einer Mehrzahl von Lasten (123) eines elektrischen Geräts (100) beschrieben. Die Schaltungsanordnung (200) umfasst, ein Haupt-Steuermodul (121), das in einem ersten Spannungs-Bereich (131) der Schaltungsanordnung (200) angeordnet ist, und das eingerichtet ist, Steuerdaten (202) zur Steuerung einer ersten Last (123) aus der Mehrzahl von Lasten (123) zu generieren; wobei die Mehrzahl von Lasten (123) in einem zweiten Spannungs-Bereich (132) angeordnet ist. Die Schaltungsanordnung (200) umfasst ferner eine galvanische Trenneinheit (122), die eingerichtet ist, die Steuerdaten (202) über eine galvanisch getrennte Verbindung von dem ersten Spannungs-Bereich (131) in den zweiten Spannungs-Bereich (132) zu übertragen. Außerdem umfasst die Schaltungsanordnung (200) zumindest ein Hilfs-Steuermodul (201), das eine Mehrzahl von Steuer-Ausgängen (204) für die entsprechende Mehrzahl von Lasten (123) umfasst. Das Hilfs-Steuermodul (201) umfasst einen Light Emitting Diode, kurz LED, Treiber, der ausgebildet ist, über die Mehrzahl von Steuer-Ausgängen (204) eine entsprechende Mehrzahl von LED-Anordnungen zu betreiben, und/oder einen General Purpose Input Output, kurz GPIO, Erweiterungsschaltkreis, bei dem ein Verhalten der Mehrzahl von Steuer-Ausgängen (204) programmierbar ist. Das Hilfs-Steuermodul (201) ist eingerichtet, auf Basis der Steuerdaten (202), einen ersten Steuer-Ausgang (204) aus der Mehrzahl von Steuer-Ausgängen (204) zur Steuerung der ersten Last (123) zu identifizieren; und eine Steuerung der ersten Last (123) über den ersten Steuer-Ausgang (204) zu bewirken.

## Beschreibung

Die Erfindung betrifft eine Schaltanordnung zur Steuerung einer Mehrzahl von elektrischen Lasten, wie z.B. Leistungs-Schaltelementen.

Ein Hausgerät, wie z.B. eine Waschmaschine oder eine Spülmaschine, weist typischerweise unterschiedliche elektrische Lasten, wie z.B. elektrische Motoren, Ventile, Pumpen, Schaltelemente, etc. auf, die z.B. im FELV Bereich (Functional Extra Low Voltage, auf Deutsch "Funktionskleinspannung ohne elektrisch sichere Trennung") des Hausgeräts angeordnet sind. Andererseits erfolgt die Steuerung der unterschiedlichen elektrischen Lasten typischerweise mittels ein oder mehrerer Mikrokontroller, die im SELV Bereich (Safety Extra Low Voltage, auf Deutsch "Sicherheitskleinspannung) oder im PELV Bereich (Protective Extra Low Voltage, auf Deutsch "Funktionskleinspannung mit elektrisch sicherer Trennung") angeordnet sind.

Die galvanische Trennung zwischen einem Steuermodul, insbesondere einem Mikrokontroller, im PELV/SELV Bereich und mehreren unterschiedlichen elektrischen Lasten im FELV Bereich ist typischerweise mit einem relativ hohen Aufwand verbunden. Das vorliegende Dokument befasst sich mit der technischen Aufgabe, eine (Kosten-, Gewichts- und/oder Bauraum-) effiziente, galvanisch getrennte, Steuerung von elektrischen Lasten in einem elektrischen Gerät zu ermöglichen.

Die Aufgabe wird durch den Gegenstand des unabhängigen Patentanspruchs gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird eine Schaltungsanordnung (auch als Schaltungs-Vorrichtung bezeichnet) zur Steuerung einer Mehrzahl von Lasten eines elektrischen Geräts, insbesondere eines Hausgeräts, beschrieben. Beispielhafte Hausgeräte sind eine Waschmaschine, eine Spülmaschine, ein Trockner, ein Kühlschrank, ein Herd, ein Ofen, etc. Eine elektrische Last eines elektrischen Geräts kann eingerichtet sein, eine Funktion des elektrischen Geräts, z.B. eine Heizfunktion, eine Kühlfunktion, eine Antriebsfunktion, etc. bereitzustellen. Beispielhafte elektrische Lasten sind: ein elektrisch betriebenes Ventil, ein elektrisch betriebener Motor, eine elektrisch betriebene Heizung, eine elektrisch betriebene Pumpe, und/oder ein elektrisches Schaltelement, insbesondere ein Relais, ein Triac, ein Transistor, ein MOSFET. Ein elektrisches Schaltelement kann insbesondere dazu verwendet werden, eine andere Last, z.B. ein Ventil, einen Motor, eine Heizung, eine Pumpe, etc. zu schalten (etwa zu aktivieren oder zu deaktivieren).

Die Schaltungsanordnung umfasst ein Haupt-Steuermodul (z.B. einen Mikrocontroller), das in einem ersten Spannungs-Bereich der Schaltungsanordnung angeordnet ist, und das eingerichtet ist, Steuerdaten zur Steuerung einer ersten Last aus der Mehrzahl von Lasten zu generieren. Die Steuerdaten können eine Steuer-Anweisung für eine bestimmte Last des elektrischen Geräts umfassen, z.B. um die Last zu aktivieren oder zu deaktivieren oder um die Leistungsaufnahme bzw. die Leistungsabgabe der Last einzustellen und/oder zu verändern. Der erste Spannungs-Bereich kann ein Safety Extra Low Voltage (SELV) oder ein Protective Extra Low Voltage (PELV) Bereich sein.

Die Mehrzahl von Lasten kann in einem zweiten Spannungs-Bereich angeordnet sein, der sich von dem ersten Spannungs-Bereich unterscheidet. Dabei kann der zweite Spannungs-Bereich einer anderen Schutzklasse angehören als der erste Spannungs-Bereich. Insbesondere kann der zweite Spannungs-Bereich ein Functional Extra Low Voltage (FELV) Bereich sein.

Des Weiteren umfasst die Schaltungsanordnung eine galvanische Trenneinheit, die eingerichtet ist, die Steuerdaten über eine galvanisch getrennte Verbindung von dem ersten Spannungs-Bereich in den zweiten Spannungs-Bereich zu übertragen. Die galvanische Trenneinheit kann z.B. einen Optokoppler, einen kapazitiven Koppler und/oder einen induktiven Koppler umfassen.

Die Schaltungsanordnung umfasst ferner zumindest ein Hilfs-Steuermodul, das eine Mehrzahl von Steuer-Ausgängen für die entsprechende Mehrzahl von Lasten umfasst. Das zumindest eine Hilfs-Steuermodul kann eingerichtet sein, die Mehrzahl von Steuer-Ausgängen unabhängig voneinander zu steuern, insbesondere unabhängig voneinander zu schalten.

Das Hilfs-Steuermodul kann einen Dateneingang aufweisen, über den die Steuerdaten von der galvanischen Trenneinheit empfangen werden können. Die empfangenen Steuerdaten können dann dazu verwendet werden, ein oder mehrere der Steuer-Ausgänge zu betreiben. Insbesondere können der Strom und/oder die Spannung an zumindest einem Steuer-Ausgang in Abhängigkeit von den Steuerdaten eingestellt werden.

Das Hilfs-Steuermodul kann einen Light Emitting Diode (LED) Treiber umfassen bzw. das Hilfs-Steuermodul kann als LED-Treiber ausgebildet sein. Der LED-Treiber kann ausgebildet sein, über die Mehrzahl von Steuer-Ausgängen eine entsprechende Mehrzahl von LED-Anordnungen (z.B. LEDs oder LED-Stränge) zu betreiben. Insbesondere kann die Mehrzahl von Steuer-Ausgängen zur Steuerung von farblich unterschiedlichen LED-Anordnungen, insbesondere von einer Red (R), einer Green (G) und/oder einer Blue (B) LED-Anordnung, vorgesehen sein.

Alternativ oder ergänzend kann das Hilfs-Steuermodul einen General Purpose Input Output (GPIO) Erweiterungsschaltkreis bzw. Expander umfassen bzw. als GPIO Erweiterungsschaltkreis bzw. Expander ausgebildet sein. Der GPIO Schaltkreis bzw. Expander kann derart ausgebildet sein, dass das Verhalten der Mehrzahl von Steuer-Ausgängen (durch einen Nutzer, ggf. frei) programmierbar ist.

Es können somit in dem zweiten Spannungs-Bereich ein oder mehrere kosteneffiziente Hilfs-Steuermodule verwendet, insbesondere zweckentfremdet verwendet, werden, um die einzelnen elektrischen (Leistung-) Lasten zu steuern. Dabei können die ein oder mehreren Hilfs-Steuermodule jeweils eingerichtet sein, auf Basis der Steuerdaten, einen ersten Steuer-Ausgang aus der Mehrzahl von Steuer-Ausgängen zur Steuerung der ersten Last zu identifizieren. Die Steuerdaten können z.B. einen Identifikator (etwa einen Bit-Code) für die erste Last bzw. für den ersten Steuer-Ausgang aufweisen. Das Hilfs-Steuermodul kann ausgebildet sein, die Steuerdaten, insbesondere eine in den Steuerdaten enthaltene Steuer-Anweisung, auf Basis des Identifikators dem ersten Steuer-Ausgang zuzuordnen.

Des Weiteren können die ein oder mehreren Hilfs-Steuermodule eingerichtet sein, die Steuerung der ersten Last über den ersten Steuer-Ausgang zu bewirken. Die Steuerdaten können (neben dem Identifikator der ersten Last) eine Steuer-Anweisung für die erste Last umfassen. Das Hilfs-Steuermodul kann eingerichtet sein, den ersten Steuer-Ausgang in Abhängigkeit von der Steuer-Anweisung zu betreiben. Insbesondere können der Spannungs-Pegel und/oder der Strom auf bzw. an dem ersten Steuer-Ausgang in Abhängigkeit von der Steuer-Anweisung eingestellt werden.

Es wird somit eine Schaltungsanordnung beschrieben, die ein oder mehrere Hilfs-Steuermodule (insbesondere ein oder mehrere LED-Treiber-Chips und/oder ein oder mehrere GPIO Expander-Chips) in dem zweiten Spannungs-Bereich nutzt, um unterschiedliche Lasten eines elektrischen Geräts zu steuern. So kann es ermöglicht werden, in effizienter Weise anhand einer einzigen galvanischen Trenneinheit mehrere unterschiedliche Lasten in dem zweiten Spannungs-Bereich zu steuern. Ferner werden LED-Treiber-Chips und/oder GPIO Expander-Chips in hohen Stückzahlen für andere Zwecke (insbesondere für die Steuerung von LED basierten Lichtelementen) verwendet, und können somit in kosteneffizienter Weise zur Steuerung der elektrischen Lasten eines elektrischen Geräts (zweckentfremdet) bereitgestellt werden.

Das Hilfs-Steuermodul kann ausgebildet sein, in Abhängigkeit von den Steuerdaten, insbesondere in Abhängigkeit von der Steuer-Anweisung für die erste Last, den Spannungs-Pegel des ersten Steuer-Ausgangs auf Hoch oder auf Tief zu setzen. So kann die erste Last in zuverlässiger Weise gesteuert, insbesondere aktiviert oder deaktiviert bzw. geöffnet oder geschlossen werden. Der Spannungs-Pegel an dem ersten Steuer-Ausgang kann bei zweckkonformer Verwendung des Hilfs-Steuermoduls, insbesondere des LED-Treibers, dazu verwendet werden, eine an dem ersten Steuer-Ausgang angeschlossene LED-Anordnung zu aktivieren oder zu deaktivieren.

Alternative oder ergänzend kann das Hilfs-Steuermodul, insbesondere der LED-Treiber des Hilfs-Steuermoduls bzw. das durch einen LED-Treiber implementierte Hilfs-Steuermodul, ausgebildet sein, in Abhängigkeit von den Steuerdaten, insbesondere in Abhängigkeit von der Steuer-Anweisung für die erste Last, den (ersten) Strom an dem ersten Steuer-Ausgang mittels Pulsweitenmodulation (PWM) einzustellen, insbesondere um die Leistung, z.B. die mechanische Leistung, die Heizleistung, etc. der ersten Last einzustellen.

Der LED-Treiber kann eingerichtet sein, eine an einem Steuer-Ausgang des LED-Treibers angeschlossene LED-Anordnung mittels PWM zu dimmen. Dabei kann die Pulsweite verkleinert oder vergrößert werden, um in entsprechender Weise die Stärke des Stroms an dem Steuer-Ausgang zu reduzieren oder zu vergrößern. Dieser Dimm-Mechanismus des LED-Treibers kann in der Schaltungsanordnung dazu genutzt werden, eine elektrische Last des elektrischen Geräts zu steuern. So kann eine besonders effiziente und präzise Steuerung von unterschiedlichen elektrischen Lasten in einem elektrischen Gerät ermöglicht werden.

Die Schaltungsanordnung kann ein erstes Hilfs-Steuermodul und ein zweites Hilfs-Steuermodul umfassen, die innerhalb des zweiten Spannungs-Bereichs angeordnet, insbesondere kaskadiert, sind. Die Hilfs-Steuermodule können dabei baugleich sein. Die Hilfs-Steuermodule können jeweils einen Dateneingang (insbesondere einen Dateneingangs-Pin) aufweisen, über den die Steuerdaten von dem jeweiligen Hilfs-Steuermodul empfangen werden können. Der Weiteren können die Hilfs-Steuermodule jeweils einen Datenausgang, insbesondere einen Kaskadierungs-Pin, aufweisen, über den die Steuerdaten an ein nachfolgendes Hilfs-Steuermodul weitergegeben werden können. Die Hilfs-Steuermodule können somit für eine Kaskadierung ausgebildet sein, bei der der Dateneingang eines nachfolgenden Hilfs-Steuermoduls mit dem Datenausgang eines vorhergehenden Hilfs-Steuermoduls verbunden ist. So können die Steuerdaten in kaskadierter Weise von einem Hilfs-Steuermodul auf ein direkt nachfolgendes Hilfs-Steuermodul weitergeleitet werden. Dies ermöglicht es, die Anzahl von elektrischen Lasten, die in dem zweiten Spannungs-Bereich über das Haupt-Steuermodul (welches in dem ersten Spannungs-Bereich angeordnet ist) gesteuert werden können, in effizienter und flexibler Weise anzupassen, insbesondere zu erhöhen.

Bei der Verwendung von einem ersten und einem zweiten Hilfs-Steuermodul kann das erste Hilfs-Steuermodul eine Mehrzahl von ersten Steuer-Ausgängen für eine entsprechende Mehrzahl von ersten Lasten umfassen. Das zweite Hilfs-Steuermodul kann eine Mehrzahl von zweiten Steuer-Ausgängen für eine entsprechende Mehrzahl von zweiten Lasten umfassen. Beispielsweise kann jedes Hilfs-Steuermodul eingerichtet sein, zwei oder mehr, oder drei oder mehr, oder vier oder mehr elektrische Lasten des elektrischen Geräts zu steuern. Die einzelnen Steuer-Ausgänge können dabei jeweils gleich aufgebaut sein.

Das erste Hilfs-Steuermodul kann ausgebildet sein, die über die galvanische Trenneinheit empfangenden Steuerdaten, insbesondere über den Kaskadierungs-Pin des ersten Hilfs-Steuermoduls, an das zweite Hilfs-Steuermodul weiterzuleiten. Insbesondere kann das erste Hilfs-Steuermodul als Schieberegister ausgebildet sein, das die Steuerdaten in Abhängigkeit von einem Takt an das zweite Hilfs-Steuermodul weiterleitet.

Das Haupt-Steuermodul kann ausgebildet sein, die Steuerdaten mittels eines Leitungscodes, insbesondere mittels eines binären Leitungscodes, etwa eines Non-Return-To-Zero (NRZ) Codes, an das Hilfs-Steuermodul zu senden. So kann eine besonders effiziente Steuerung von mehreren unterschiedlichen Lasten ermöglicht werden.

Gemäß einem weiteren Aspekt wird ein Hausgerät (z.B. eine Waschmaschine, eine Spülmaschine, ein Ofen, ein Herd, eine Küchenmaschine, ein Staubsauger, ein Trockner, ein Kühlschrank, etc.) beschrieben, das die in diesem Dokument beschriebene Schaltungsanordnung umfasst. Das Hausgerät kann einen Netzanschluss zur Anbindung des Hausgeräts an eine AC-Versorgungsspannung umfassen. Des Weiteren kann das Hausgerät ein Schaltnetzteil und/oder ein oder mehrere Spannungswandler umfassen, die ausgebildet sind, auf Basis der AC-Versorgungsspannung mehrere unterschiedliche Spannungs-Bereiche in dem Hausgerät bereitzustellen (z.B. für den Betrieb eines Haupt-Steuermoduls einerseits und für den Betrieb von mehreren unterschiedlichen elektrischen Lasten andererseits).

Es ist zu beachten, dass jegliche Aspekte der in diesem Dokument beschriebenen Schaltungsanordnung in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen
Figur 1a ein Blockdiagramm eines beispielhaften Hausgeräts;
Figur 1b eine beispielhafte galvanische Trennung zwischen Steuermodulen und Lasten eines Hausgeräts; und
Figur 2 eine beispielhafte Schaltungsanordnung zur Steuerung von mehreren elektrischen Lasten eines elektrischen Geräts, insbesondere eines Hausgeräts.

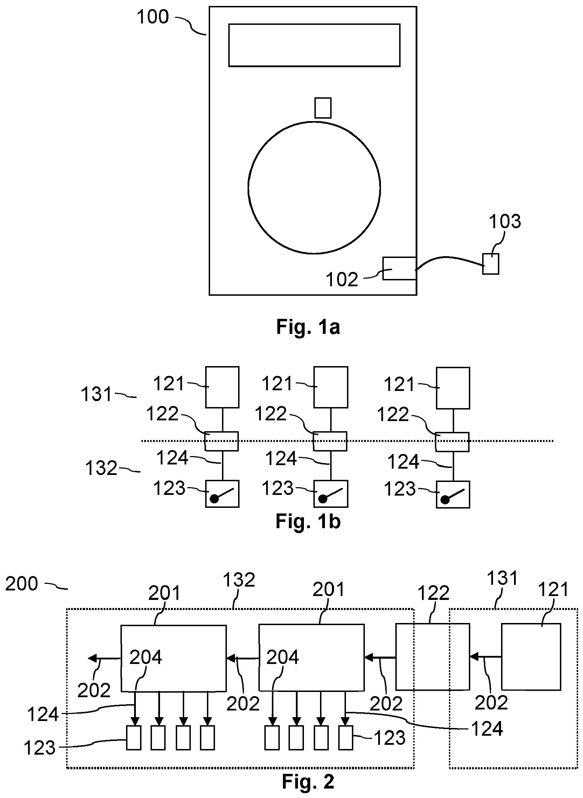

Wie eingangs dargelegt, befasst sich das vorliegende Dokument mit der effizienten, galvanische getrennten, Steuerung von unterschiedlichen Lasten, insbesondere von unterschiedlichen Schaltelementen, eines Geräts, insbesondere eines Hausgeräts. In diesem Zusammenhang zeigt Fig. 1a ein beispielhaftes Hausgerät 100, z.B. eine Waschmaschine, mit einem Netzanschluss 102, insbesondere mit einem Schaltnetzteil, über das das Hausgerät 100 an eine Wechselstrom-Versorgungsspannung 103 angeschlossen werden kann.

Das Hausgerät 100 umfasst typischerweise, wie beispielhaft in Fig. 1b dargestellt, ein oder mehrere Steuermodule 121, die eingerichtet sind, unterschiedliche elektrische Lasten 123, insbesondere unterschiedliche elektrische Schaltelemente, des Hausgeräts 100 steuern. Insbesondere kann von einem Steuermodul 121 eine Steuer-Anweisung 124 an eine elektrische Last 123 gesendet werden, z.B. um die elektrische Last 123 zu aktivieren oder um die elektrische Last 123 zu deaktivieren.

Das Steuermodul 121 für eine elektrische Last 123 kann im SELV/PELV-Bereich 131 des Hausgeräts 100 angeordnet sein, während die elektrische Last 123 im FELV-Bereich 132 des Hausgeräts 100 angeordnet ist. Zwischen dem Steuermodul 121 und der elektrischen Last 123 ist daher eine galvanische Trenneinheit 122 angeordnet, die eingerichtet ist, die Steuer-Anweisung 124 über eine galvanisch getrennte Kommunikationsverbindung von dem Steuermodul 121 an die elektrische Last 123 zu übertragen.

Ein Hausgerät 100 kann somit verschiedene elektrische Lasten 123, wie z.B. ein oder mehrere Ventile, ein oder mehrere Motoren, eine Heizung, ein oder mehrere Pumpen, etc., umfassen, die ggf. über entsprechende ein oder mehrere Leistungsschalter 123, wie ein oder mehrere Relais, Triacs, Transistoren, MOSFETS, etc., geschaltet werden können. Die ein oder mehreren Schaltelemente 123 werden von ein oder mehreren Steuermodulen 121, insbesondere Mikrokontrollern, angesteuert.

Die Ansteuerung der Schaltelemente 123 erfolgt typischerweise aus Sicherheitsgründen und/oder als Schutzmaßnahme und/oder zur Vermeidung von Masseschleifen und/oder zur Vermeidung von Potentialverschiebungen galvanisch getrennt. Die galvanische Trennung der Ansteuerung eines Leistungs-Schaltelements 123 erfolgt z.B. optisch (mittels eines Optokopplers, Optotriacs, etc..), induktiv (mittels eines Übertragers, etc.) oder kapazitiv (mittels eines kapazitiven Kopplers, eines Kondensators, etc.). So können die einzelnen Schaltelemente 123 über einen von SELV oder PELV versorgten Mikrokontroller geschaltet.

Die galvanische Trennung zwischen einem Steuermodul 121 und den unterschiedlichen Lasten 123 kann durch Verwendung einer dedizierten galvanischen Trenneinheit 124 für jede einzelne Last 123 bewirkt werden. Alternativ kann ein zusätzliches Steuermodul (insbesondere ein zusätzlicher Mikrocontroller) verwendet werden, das mit dem Haupt-Steuermodul 121 über einen getrennten Daten-BUS kommuniziert. Die galvanisch getrennte Ansteuerung der einzelnen Lasten 123 kann dann durch das zusätzliche Steuermodul bewirkt werden.

Die o.g. Maßnahmen zur galvanischen Trennung sind typischerweise mit relativ hohen Kosten, insbesondere für den Verbau einer dedizierten Trenneinheit 124 für jede einzelne Last 123 oder für den Verbau eines zusätzlichen Mikrocontrollers, verbunden. Ferner wird typischerweise ein relativ großer Trenngraben zwischen dem SELV/PELV-Bereich 131 und dem FELV-Bereich 132 benötigt.

Fig. 2 zeigt eine Schaltungsanordnung 200 mit einem Haupt-Steuermodul 121, das in einem ersten Spannungs-Bereich 131 (insbesondere in einem SELV-Bereich oder in einem PELV-Bereich) angeordnet ist. Das Haupt-Steuermodul 121 ist über eine galvanische Trenneinheit 122 mit ein oder mehreren Hilfs-Steuermodulen 201 verbunden. Dabei ist ein Hilfs-Steuermodul 201 eingerichtet, ein oder mehrere Lasten 123 zu steuern. Insbesondere kann ein Hilfs-Steuermodul 201 ein oder mehrere Steuer-Ausgänge 204 zur Steuerung von entsprechenden ein oder mehreren Lasten 123 aufweisen. Die ein oder mehreren Hilfs-Steuermodule 201 der Schaltungsanordnung 200 sind in einem zweiten Spannungs-Bereich 132 (insbesondere in einem FELV-Bereich) angeordnet.

Das Haupt-Steuermodul 121 ist eingerichtet, Steuerdaten 202 über die Trenneinheit 122 an eines der Hilfs-Steuermodule 201 zu senden. Dabei können die Steuerdaten 202 einen Identifikator für die Last 123 anzeigen, insbesondere für das Hilfs-Steuermodul 201 und für den Steuer-Ausgang 204, an dem die Last 123 angeschlossen ist, für die die Steuerdaten 202 bestimmt sind. Des Weiteren können die Steuerdaten 202 eine Steuer-Anweisung 124 für die durch den Identifikator angezeigte Last 123 aufweisen (z.B. eine Steuer-Anweisung 124 zur Aktivierung oder zur Deaktivierung der Last 123 oder eine Steuer-Anweisung 124 zur Einstellung der Leistung der Last 123).

Ein Hilfs-Steuermodul 201 der Schaltungsanordnung 200 kann eingerichtet sein, Steuerdaten 202, die von dem Haupt-Steuermodul 121 gesendet wurden, dahingehend zu überprüfen, ob die Steuerdaten 202 für eine Last 123 bestimmt sind, die an einem Steuer-Ausgang 204 des Hilfs-Steuermoduls 121 angeschlossen ist. Wenn dies nicht der Fall ist, so können die Steuerdaten 202 von dem Hilfs-Steuermodul 121 ignoriert werden. Wenn dies der Fall ist, so kann die Steuer-Anweisung 124 an den identifizierten Steuer-Ausgang 204 des Hilfs-Steuermoduls 121 weitergeleitet werden. So kann in effizienter Weise eine Steuerung von unterschiedlichen Lasten 123 über unterschiedliche Spannungs-Bereiche 131, 132 hinweg ermöglicht werden.

In einem bevorzugten Beispiel ist oder umfasst ein Hilfs-Steuermodul 121 einen LED (Light Emitting Diode) Treiber, insbesondere einen Single Line LED-Treiber, oder einen GPIO (general purpose input/output) Expander. So kann eine besonders effiziente Schaltungsanordnung 200 bereitgestellt werden.

Durch die Verwendung von Single Line LED-Treibern oder GPIO Expandern 201 können nicht nur LEDs, sondern auch andere Lasten 123 angesteuert werden. Dabei wird nur ein einziges galvanisches Trennelement 122 benötigt. Ferner kann für die einzelnen Lasten 123 jeweils ein Steuer-Ausgang 204, insbesondere ein Chip-Pin, verwendet werden. Durch die Verwendung von LED-Treibern bzw. GPIO Expandern 201 im FELV Bereich 132 kann die PCB Fläche der Schaltungsanordnung 200 reduziert werden, da die Anzahl von Trennelementen 122 zwischen SELV/PELV 131 und FELV 132 reduziert werden kann. Der Haupt-Mikrokontroller 121 kann einen Leitungscode 202, zum Beispiel einen Non-Return-to-Zero Code, über das galvanische Trennelement 122 als Ansteuersignal 123 zu einem Treiber 201 senden. Der Treiber 201 kann dann direkt oder über einen

Leistungsschalter eine Last 123 schalten.

Ein Treiber 201 kann eingerichtet sein, mehrere Ausgänge 204 unabhängig voneinander zu schalten. Ferner ist eine Kaskadierung von mehreren Treibern 201 möglich. Eine Kaskade von Treibern 201 kann dabei wie ein Schieberegister arbeiten, bei dem der Takt von den Treibern 201 selbst erzeugt und/oder separat übertragen wird. Dadurch kann eine nahezu unbegrenzte Vielzahl von Treibern 201 aneinander gekettet werden, die wiederum entsprechend viele Lasten 123 ansteuern können.

Die Verwendung von LED-Treibern 201 zur Ansteuerung von Lasten 123 in einem elektrischen Gerät 100 ermöglicht eine besonders Kosten- und Bauraum-effiziente Ansteuerung der Lasten 123, insbesondere aufgrund der Tatsache, dass galvanische Trennelemente 122 eingespart werden können und/oder aufgrund der Tatsache, dass LED-Treiber 201 in hohen Stückzahlen gefertigt werden. Ferner ermöglicht die Kaskadierung von Treibern 201 eine flexible Anpassung der Anzahl der gesteuerten Lasten 123. Außerdem kann die erforderliche PCB (Printed Circuit Board) Fläche für den Trenngraben zwischen den Spannungsbereichen 131, 132 reduziert werden.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Schaltungsanordnung veranschaulichen sollen.

## Patentansprüche

1. Schaltungsanordnung (200) zur Steuerung einer Mehrzahl von Lasten (123) eines elektrischen Geräts (100); wobei die Schaltungsanordnung (200) umfasst,
- ein Haupt-Steuermodul (121), das in einem ersten Spannungs-Bereich (131) der Schaltungsanordnung (200) angeordnet ist, und das eingerichtet ist, Steuerdaten (202) zur Steuerung einer ersten Last (123) aus der Mehrzahl von Lasten (123) zu generieren; wobei die Mehrzahl von Lasten (123) in einem zweiten Spannungs-Bereich (132) angeordnet ist;
- eine galvanische Trenneinheit (122), die eingerichtet ist, die Steuerdaten (202) über eine galvanisch getrennte Verbindung von dem ersten Spannungs-Bereich (131) in den zweiten Spannungs-Bereich (132) zu übertragen;
- zumindest ein Hilfs-Steuermodul (201), das eine Mehrzahl von Steuer-Ausgängen (204) für die entsprechende Mehrzahl von Lasten (123) umfasst; wobei das Hilfs-Steuermodul (201) umfasst,
- einen Light Emitting Diode, kurz LED, Treiber, der ausgebildet ist, über die Mehrzahl von Steuer-Ausgängen (204) eine entsprechende Mehrzahl von LED-Anordnungen zu betreiben, und/oder
- einen General Purpose Input Output, kurz GPIO, Erweiterungsschaltkreis, bei dem ein Verhalten der Mehrzahl von Steuer-Ausgängen (204) programmierbar ist; und
wobei das Hilfs-Steuermodul (201) eingerichtet ist, auf Basis der Steuerdaten (202),
- einen ersten Steuer-Ausgang (204) aus der Mehrzahl von Steuer-Ausgängen (204) zur Steuerung der ersten Last (123) zu identifizieren; und
- eine Steuerung der ersten Last (123) über den ersten Steuer-Ausgang (204) zu bewirken.

2. Schaltungsanordnung (200) gemäß Anspruch 1, wobei das Hilfs-Steuermodul (201) ausgebildet ist, in Abhängigkeit von den Steuerdaten (202) einen Spannungs-Pegel des ersten Steuer-Ausgangs (204) auf Hoch oder Tief zu setzen, um die erste Last (123) zu steuern, insbesondere zu aktivieren oder zu deaktivieren.

3. Schaltungsanordnung (200) gemäß einem der vorhergehenden Ansprüche, wobei
- das Hilfs-Steuermodul (201) einen LED-Treiber umfasst; und
- der LED-Treiber ausgebildet ist, in Abhängigkeit von den Steuerdaten (202) einen ersten Strom an dem ersten Steuer-Ausgang (204) mittels Pulsweitenmodulation einzustellen, insbesondere um eine Leistung der ersten Last (123) einzustellen.

4. Schaltungsanordnung (200) gemäß einem der vorhergehenden Ansprüche, wobei
- das Hilfs-Steuermodul (201) einen LED-Treiber umfasst; und
- die Mehrzahl von Steuer-Ausgängen (204) zur Steuerung von farblich unterschiedlichen LED-Anordnungen, insbesondere von einer Red, kurz R, einer Green, kurz G, und einer Blue, Kurz B, LED-Anordnung, vorgesehen ist.

5. Schaltungsanordnung (200) gemäß einem der vorhergehenden Ansprüche, wobei
- die Schaltungsanordnung (200) ein erstes Hilfs-Steuermodul (201) und ein zweites Hilfs-Steuermodul (201) umfasst, die innerhalb des zweiten Spannungs-Bereichs (132) angeordnet, insbesondere kaskadiert, sind;
- das erste Hilfs-Steuermodul (201) eine Mehrzahl von ersten Steuer-Ausgängen (204) für eine entsprechende Mehrzahl von ersten Lasten (123) umfasst;
- das zweite Hilfs-Steuermodul (201) eine Mehrzahl von zweiten Steuer-Ausgängen (204) für eine entsprechende Mehrzahl von zweiten Lasten (123) umfasst;
- das erste Hilfs-Steuermodul (201) ausgebildet ist, die über die galvanische Trenneinheit (122) empfangenden Steuerdaten (202), insbesondere über einen Kaskadierungs-Pin, an das zweite Hilfs-Steuermodul (201) weiterzuleiten.

6. Schaltungsanordnung (200) gemäß Anspruch 5, wobei das erste Hilfs-Steuermodul (201) als Schieberegister ausgebildet ist, das die Steuerdaten (202) in Abhängigkeit von einem Takt an das zweite Hilfs-Steuermodul (201) weiterleitet.

7. Schaltungsanordnung (200) gemäß einem der vorhergehenden Ansprüche, wobei das Haupt-Steuermodul (121) ausgebildet ist, die Steuerdaten (202) mittels eines Leitungscodes, insbesondere mittels eines binären Leitungscodes, etwa eines Non-Return-To-Zero Codes, an das Hilfs-Steuermodul (201) zu senden.

8. Schaltungsanordnung (200) gemäß einem der vorhergehenden Ansprüche, wobei das Hilfs-Steuermodul (201) eingerichtet ist, die Mehrzahl von Steuer-Ausgängen (122) unabhängig voneinander zu steuern, insbesondere zu schalten.

9. Schaltungsanordnung (200) gemäß einem der vorhergehenden Ansprüche, wobei die Mehrzahl von Lasten (123) ein oder mehrere umfassen von: ein elektrisch betriebenes Ventil, einen elektrisch betriebenen Motor, eine elektrisch betriebene Heizung, eine elektrisch betriebene Pumpe, und/oder ein elektrisches Schaltelement, insbesondere ein Relais, ein Triac, ein Transistor, ein MOSFET.

10. Schaltungsanordnung (200) gemäß einem der vorhergehenden Ansprüche, wobei
- der erste Spannungs-Bereich (131) ein Safety Extra Low Voltage, kurz SELV, oder ein Protective Extra Low Voltage, kurz, PELV, Bereich ist; und/oder
- der zweite Spannungs-Bereich (132) ein Functional Extra Low Voltage, FELV, Bereich ist.
